# EUROPEAN PATENT SPECIFICATION

(11) **EP 2 621 712 B1**
(45) Date of publication and mention of the grant of the patent: **24.10.2018**
(21) Application number: 11761579.9
(22) Date of filing: 26.09.2011
(51) Int. Cl.: B29C 67/00, C08L 77/06, B29C 41/04, C08J 3/12, C08G 69/26

(54) **POLYMER POWDER COMPOSITION**
POLYMERPULVERZUSAMMENSETZUNG
COMPOSITION DE POUDRE POLYMÈRE

(30) Priority: 28.09.2010 EP 10181048
(43) Date of publication of application: 07.08.2013
(73) Proprietor: DSM IP Assets B.V., 6411 TE Heerlen (NL)
(72) Inventor: DULLAERT, Konraad, B-3001 Heverlee (BE)
(74) Representative: DSM Intellectual Property
(86) International application number: PCT/EP2011/066633
(87) International publication number: WO 2012/041793

(56) References cited:
- WO-A1-2008/057844
- WO-A1-2010/099155
- US-A1- 2007 021 535
- Provläsningsexemplar / Preview: "Analyse granulométrique. Méthodes par diffraction laser. Partie 1 : principes généraux", , 1 September 2000 (2000-09-01), XP55477544, Retrieved from the Internet: URL:https://www.sis.se/api/document/previe w/615914/

## Description

This invention relates to a polymer powder composition, a method of production of a polymer shaped article by laser-sintering and polymer shaped articles obtained by laser-sintering.

### Prior art

Laser-sintering is a known technique to produce shaped articles in a rapid and low-cost manner and this technique belongs to the so-called rapid prototyping.

A polymer powder composition is applied with a roll in a thin layer in a sintering chamber which has been heated to a temperature slightly below the melting point of the polymer. At the top of the chamber, where new powder is being placed, the temperature is close to melting temperature of the powder composition. Going more down in chamber the temperature is lower to ensure cooling and crystallization. The layer thickness is selected, together with the particle size of the polymer powder composition, so that a melt layer is produced after the subsequent laser sintering. The laser sinters the polymer powder composition together which is controlled by a computer. After this step, another layer of polymer powder composition is applied which is again sintered by the laser. This process is repeated until a block has been obtained with the desired number of layers and consisting on the outside of powder, which hides an interior consisting at the top of a highly viscous melt in the shape of the desired shaped article. Unmelted regions, in which the polymer powder composition is still present in solid form, stabilize the shape of the melt. The block is then slowly cooled and after cooling the block is removed from the sintering chamber, and the shaped article is separated from the unsintered polymer powder composition.

The polymer powder composition, suitable for laser sintering, requires a melting peak and recrystallization peak which do not overlap. This has for example been described in WO96/06881. Several suitable polymers are mentioned herein, including nylon-11. A drawback of the known polymer suitable for laser sintering is that the unsintered polymer powder composition can only be reused insofar the viscosity has not increased too much, due to the high temperatures it was subjected to.

### Object of present invention

It is thus an object to provide a polymer powder composition that shows less viscosity increase due to high temperatures.

### Present invention

The present invention relates to a polymer composition as defined in claims 1-9. It now has surprisingly been found that a polymer powder composition comprising at least 70 wt% of PA410 with respect to the total amount of composition shows less viscosity increase due to high temperatures. This has been exemplified in examples that are listed below. The polymer powder composition has the advantage that when applied in laser sintering, the unsintered powder does not have to be discarded after use, and thus results in more economical use. Another advantage is that the relative solution viscosity even decreases after heating, instead of an increase which is usually observed. This allows for re-use of the polymer powder, and is thus economically advantageous, as well as for environmental reasons. Another advantage is that the polymer powder composition according to the invention does not need to be endcapped before use in laser-sintering, which makes the process more simple. The polymer powder composition according to the invention can also advantageously be used in roto-molding, as the flow characteristics during processing remain good.

### Particle size of powder and method of preparation of powder

The polymer powder composition has an average mean particle size of at least 10 micrometer, as measured according to ISO 13320-1 on a SYMPATEC HELOS system, model HELOS/KF, and a RODOS dry dispersion unit. More preferably the average mean particle size is at least 20 micrometer and most preferred at least 30 micrometer. Preferably, the mean particle diameter is at most 300 micrometer, more preferably at most 250 micrometer, and most preferred at most 100 micrometer.

A polymer powder composition with a small average mean particle size has the advantage that the surface properties of the shaped article as obtained by laser sintering the polymer powder composition is better. However, a polymer powder composition with a larger average mean particle size has the advantage that the laser sintering process can be faster, as the layer thickness of polymer powder composition is larger. An optimum of average mean particle size depends on the desired properties and generally lies in the range of 35 to 75 micrometer.

The invention also relates to a method of production of a polymer powder composition according to the invention. This method includes cryogenic grinding or milling and/or sieving of a polymer powder composition according to the invention. By this method, an average mean particle size of at least 25 micrometer can be obtained. This is advantageous for obtaining better powder flow and higher surface quality and smoothness of laser sintered parts.

Also larger particle sizes can be obtained. An advantage of a larger particle size is that the production speed can be higher as less layers are necessary. Another method is standard grinding and grading. Spray-drying or precipitation from solution allows for very small particle sizes, which also result in more spherical parts. This is advantageous for the flow of the powder, packing of the powder and the strength of the part as less porous material is obtained.

The polymer powder composition may advantageously be annealed prior to production of the powder. Annealing is here understood to be a thermal treatment of the powder composition at a temperature above the glass transition temperature and below the melting temperature in an inert atmosphere. Preferably annealing is performed under a nitrogen atmosphere. Annealing has the advantage that it increases the process window for laser sintering.

### PA410

PA410 is here understood to be a polyamide containing monomer units of 1,4-diaminobutane and 1,10-decanedioic acid. PA410 can be prepared by the following steps:
1. making a solution comprising a salt of 1,4-diaminobutane and 1,10-decanedioic acid and water, at a temperature at which the salt dissolves;
2. concentrating the solution of the salt at a temperature above the crystallization temperature of the salt, at a pressure of at most 7 barA to a water content of between 0 and 30 wt% based on the total amount of solution,
3. producing a polymer from the solution obtained by step 2, while keeping the polymer in a melt and at a pressure of less than 18 barA,
4. depressurizing the polymer obtained at step 3 while keeping the polymer in the melt to further polymerize the polymer.

Preferably, the polymer powder composition comprises at least 70 wt % of PA410 with respect to the total amount of composition. Higher amounts of PA410 are also possible, such as 80 and 90 wt%.

Preferably, the polymer powder composition comprises at most 100 wt% PA410, more preferably at most 90 wt%, even more preferably at most 80 wt% with respect to the total amount of composition.

### Further advantages

The polymer powder composition according to the invention surprisingly shows less orange peel. Orange peel is here understood to be surface phenomenon which resembles the bumpy surface of the skin of the orange fruit. As less orange peel is observed, the average mean particle size of the polyamide powder composition according to the invention can be chosen to be larger, before orange peel is observed, which allows faster production speed.

Another advantage is that the polymer powder composition according to the invention can still be coated using a thermal-cured coating as the shaped article can be exposed to high peak temperatures without significant deformation. This is also exemplified by examples described below, wherein the temperature of deflection was measured. This has the advantage that the surface of the shaped article can easily be treated with for example powder coatings (e.g. epoxy, polyester or polyurethane based coating) or ceramic coatings which enhances the esthetics and/or durability of the shaped article. Of course the shaped article can also be coated with solvent-based or water-based paint/coating or UV-cured coating.

### Further additives

Several additives may be present in the polymer powder composition.

The polymer powder composition according to the invention, may further comprises a crystallization retardant, such as nigrosine, layered silicates, amorphous semi-aromatic polyamides, calcium chloride and lithium chloride, preferably in an amount of at least 1 wt% with respect to the total amount of composition. This has the advantage that the difference between the melting peak and recrystallization peak of the polymer becomes larger and thus a larger processing window for the laser sintering process is obtained.

The polymer powder composition according to the invention may further comprise a component which increases laser adsorption, such as carbon black, carbon fiber and metal oxides. Preferably this component is present in an amount of at least 1 wt% with respect to the total amount of composition.

The polymer powder composition according to the invention may further comprise flow agents, flame retardants, electrically conductive additives and reinforcers. The presence of reinforcers is advantageous for the modulus of the shaped article and are for example glass fibers. Preferably, at least 10 wt% of glass fibers are present, more preferably at least 20 wt% and most preferred at least 30 wt% with respect to the total amount of composition. Electrically conductive additives are conductive powders or fibres, e.g. of metal and carbon. The presence of electrically conductive additives have the advantage that electrostatic coating of the shaped article is facilitated.

The polymer powder composition may also comprise impact modifiers, such as thermoplastic polymers, as for example functionalized elastomers.

The polymer powder composition may also comprise a second polymer, besides PA410. Preferably the second polymer is a polyamide, such as PA6, PA66, PA610, PA11 or PA12. More preferably, the second polymer is a polyamide with a lower melting point than PA410, such as for example PA6, PA610, PA11 or PA12.

### Shaped articles

The invention further relates to shaped articles obtained by laser-sintering the polymer powder composition according to the invention. These shaped articles exhibit good chemical resistance. The shaped articles are preferably employed in the automotive industry, such as manifold, climate control parts, mirror housing, interior parts, small functional parts, fuel or fluid containers or connectors or in the electronic industry, such as lighting housings, LED housings, and in aerospace market.

The invention further also relates to parts obtained by roto-molding of the polymer powder composition according to the invention. Roto-molding is here understood to comprise at least the following steps:
a. filling a mold with a polymer powder composition;
b. heating the mold while rotating it to a temperature at which the polymer powder composition melts to obtain a melt;
c. dispersing the melt to the wall of the mold;
d. optionally, sintering the melt;
e. cooling the mold until the melt solidifies to form a part;
f. opening the mold;
g. ejecting the part.

Employing the polymer powder composition according to the invention allows for longer processing times, as less viscosity increase is observed during high temperatures.

### Examples

For various samples the relative viscosity (RSV) was measured, before and after aging. To simulate the conditions during laser sintering, aging was performed at a certain temperature (Ta) under a 2% oxygen environment for 20 hours. Relative solution viscosity (RSV) was measured in m-cresol at a temperature of 25 °C according to ISO307, with the exception that the concentration of the polyamide was 0.01 g/ml.
Results are listed in Table 1.

**Table 1: RSV results**

| Experiment number | Polyamide | aging temperature Ta [°C] | RSV before aging | RSV after aging |
|---|---|---|---|---|
| 1 | PA410 | 228 | 3.53 | 3.13 |
| 2 | PA410 | 228 | 3.35 | 3.07 |
| 3 | PA410 | 228 | 3.15 | 3.15 |
| 4 | PA410 | 228 | 3.1 | 3.03 |
| C_1 | PA12 | 178 | 2.65 | -- |
| C_2 | PA6 | 193 | 2.95 | 3.3 |
| C_3 | PA66 | 240 | 2.25 | 3.52 |
| C_4 | PA610 | 185 | 2.5 | -- |

| | | | | |
|---|---|---|---|---|
| -- indicates the samples were no longer measurable on standard equipment: RSV too high | | | | |

The results in table 1 clearly show that a powder composition comprising PA410 either have the same RSV or show a decrease in relative solution viscosity upon aging, whereas the comparative experiments all show an increase in relative solution viscosity.

For various samples the temperature of deflection (HDT) under load was determined according to ISO-75-1-2. The normal load in the HDT-A measurements is 1.80 MPa and in the HDT-B measurements 0.45 MPa. The results are listed in Table 2.

**Table 2: HDT results**

| Experiment number | Polyamide | Tm | HDT-A | HDT-B |
|---|---|---|---|---|
| | | [°C] | [°C] | [°C] |
| 1 | PA410 | 246 | 74 | 180 |
| C_1 | PA12 | 178 | 50 | 130 |
| C_2 | PA6 | 222 | 58 | 160 |
| C_3 | PA610 | 223 | 54 | 140 |

From Table 2 it is clear that the temperature of deflection for PA410 is much higher than for polyamides as used in the prior art. This is advantageous for further processing of shaped articles as obtained by laser sintering.

## Claims

1. Polymer powder composition, **characterized in that** the polymer powder composition comprises at least 70 wt% PA410 with respect to the total amount of composition and **characterized in that** the polymer powder has an average mean particle size of at least 10 micrometer as measured according to ISO 13320-1.

2. Polymer powder composition according to claim 1, **characterized in that** the average mean particle size is at least 20 micrometer as measured according to ISO 13320-1.

3. Polymer powder composition according to claim 1 or 2, **characterized in that** it further comprises a crystallization retardant.

4. Polymer powder composition according to any of the claims above, **characterized in that** it further comprises reinforcers.

5. Polymer powder composition according to any of the claims above, **characterized in that** it further comprises carbon black in an amount of at least 1 wt% with respect to the total amount of composition.

6. Use of polymer powder composition according to any of claims above in a laser sintering process.

7. Shaped article as obtained by a method of laser sintering the polymer powder composition according to any of claims 1 to 5.

8. Use of polymer powder composition according to any of claims 1 to 5 in a roto-molding process.

9. Parts as obtained by roto-molding the polymer powder composition according to any of claims 1 to 5.

## Patentansprüche

1. Polymerpulverzusammensetzung, **dadurch gekennzeichnet, dass** die Polymerpulverzusammensetzung mindestens 70 Gew.-% PA410, bezogen auf die Gesamtmenge der Zusammensetzung, umfasst, und **dadurch gekennzeichnet, dass** das Polymerpulver eine gemäß ISO 13320-1 gemessene durchschnittliche mittlere Partikelgröße von mindestens 10 Mikrometer aufweist.

2. Polymerpulverzusammensetzung nach Anspruch 1, **dadurch gekennzeichnet, dass** die gemäß ISO 13320-1 gemessene durchschnittliche mittlere Partikelgröße mindestens 20 Mikrometer beträgt.

3. Polymerpulverzusammensetzung nach Anspruch 1 oder 2, **dadurch gekennzeichnet, dass** sie ferner einen Kristallisationsverzögerer umfasst.

4. Polymerpulverzusammensetzung nach einem der obigen Ansprüche, **dadurch gekennzeichnet, dass** sie ferner Verstärkungsmittel umfasst.

5. Polymerpulverzusammensetzung nach einem der obigen Ansprüche, **dadurch gekennzeichnet, dass** sie ferner Ruß in einer Menge von mindestens 1 Gew.-%, bezogen auf die Gesamtmenge der Zusammensetzung, umfasst.

6. Verwendung einer Polymerpulverzusammensetzung nach einem der obigen Ansprüche bei einem Lasersinterverfahren.

7. Formkörper, wie durch ein Verfahren zum Lasersintern der Polymerpulverzusammensetzung nach einem der Ansprüche 1 bis 5 erhalten.

8. Verwendung der Polymerpulverzusammensetzung nach einem der Ansprüche 1 bis 5 in einem Rotationsgussverfahren.

9. Teile, wie durch Rotationsguss der Polymerpulverzusammensetzung nach einem der Ansprüche 1 bis 5 erhalten.

## Revendications

1. Composition de poudre de polymère, **caractérisée en ce que** la composition de poudre de polymère comprend au moins 70 % en poids de PA410 par rapport à la quantité totale de composition et **caractérisée en ce que** la poudre de polymère a une taille moyenne des particules telle que mesurée selon la méthode ISO 13320-1 d'au moins 10 micromètres.

2. Composition de poudre de polymère selon la revendication 1, **caractérisée en ce que** la taille moyenne des particules telle que mesurée selon la méthode ISO 13320-1 est d'au moins 20 micromètres.

3. Composition de poudre de polymère selon la revendication 1 ou 2, **caractérisée en ce qu'**elle comprend en outre un retardateur de cristallisation.

4. Composition de poudre de polymère selon l'une quelconque des revendications ci-dessus, **caractérisée en ce qu'**elle comprend en outre des agents renforçants.

5. Composition de poudre de polymère selon l'une quelconque des revendications ci-dessus, **caractérisée en ce qu'**elle comprend en outre du noir de carbone en une quantité d'au moins 1 % en poids par rapport à la quantité totale de composition.

6. Utilisation de composition de poudre de polymère selon l'une quelconque des revendications ci-dessus dans un processus de frittage par laser.

7. Article façonné tel qu'obtenu par un procédé de frittage par laser de la composition de poudre de polymère selon l'une quelconque des revendications 1 à 5.

8. Utilisation de composition de poudre de polymère selon l'une quelconque des revendications 1 à 5 dans un processus de rotomoulage.

9. Pièces telles qu'obtenues par rotomoulage de la composition de poudre de polymère selon l'une quelconque des revendications 1 à 5.
